# EUROPEAN PATENT APPLICATION

(11) **EP 4 571 926 A1**
(43) Date of publication of application: **18.06.2025**
(21) Application number: 23913927.2
(22) Date of filing: 03.01.2023
(51) Int. Cl.: H01M 10/058, H01M 4/13

(54) **BATTERY CELL, LAMINATED BATTERY AND ELECTRICAL APPARATUS**

(71) Applicant: Contemporary Amperex Technology (Hong Kong) Limited, Central (HK)
(72) Inventor: WU, Kai, Ningde City Fujian 352100 (CN); WANG, Jiazheng, Ningde City Fujian 352100 (CN); YAN, Qingwei, Ningde City Fujian 352100 (CN); DONG, Xiaobin, Ningde City Fujian 352100 (CN)
(74) Representative: Ziebig Hengelhaupt Intellectual Property Attorneys Patentanwaltskanzlei PartGmbB
(86) International application number: PCT/CN2023/070176
(87) International publication number: WO 2024/145767

(57) **Abstract**

This application provides a battery cell, a stacked-type battery, and an electrical device. The battery cell includes at least one electrode assembly. The electrode assembly includes a positive electrode plate and a negative electrode plate. The negative electrode plate includes a first negative electrode plate and a second negative electrode plate. A capacity per unit volume of the first negative electrode plate is greater than a capacity per unit volume of the second negative electrode plate. At least one positive electrode plate is disposed between two adjacent first negative electrode plates, and at least one second negative electrode plate is disposed between the two adjacent first negative electrode plates. The above technical solution alleviates disadvantages caused by expansion of the electrode plate, improves longevity of the battery, and improves an energy density and storage performance of the battery.

## Description

### TECHNICAL FIELD

This application relates to the field of battery technology, and in particular, to a battery cell, a stacked-type battery, and an electrical device.

### BACKGROUND

Secondary batteries are widely used in consumer electronics and electric vehicles by virtue of outstanding features such as a light weight, no pollution, and no memory effect. A negative electrode plate of a conventional secondary battery is typically prepared from a silicon-based electrode plate. Silicon-based materials are of a high capacity, but produce a considerable volume effect and are of low conductivity. During charge-discharge cycling, the expansion of the silicon-based materials may cause a binder in the electrode plate to fail, and make material powder fall off the electrode plate, thereby leading to irreversible loss of the capacity of the electrode plate.

### SUMMARY

In view of the technical problems described in the background section above, this application provides a battery cell, a stacked-type battery, and an electrical device to alleviate disadvantages caused by expansion of the electrode plate, improve longevity of the battery, and improve an energy density and storage performance of the battery.

To achieve the above objective, a first aspect of this application provides a battery cell. The battery cell includes at least one electrode assembly. The electrode assembly includes a positive electrode plate and a negative electrode plate. The negative electrode plate includes a first negative electrode plate and a second negative electrode plate. A capacity per unit volume of the first negative electrode plate is greater than a capacity per unit volume of the second negative electrode plate. At least one positive electrode plate is disposed between two adjacent first negative electrode plates, and at least one second negative electrode plate is disposed between the two adjacent first negative electrode plates.

This application produces at least the following beneficial effects: Different from the prior art, this application provides two types of negative electrode plates of different capacities per unit volume, and disposes at least one negative electrode plate of a relatively low capacity per unit volume between two adjacent negative electrode plates of a relatively high capacity per unit volume, thereby alleviating the volume expansion effect of the electrode plate, reducing battery failure caused by electrode plate expansion, and improving the energy density and storage performance of the battery.

In some embodiments, M second negative electrode plates are disposed between the two adjacent first negative electrode plates, where 1 ≤ M ≤ 2.5n, n = Cs/Cg, M is an integer greater than or equal to 1, Cs is the capacity per unit volume of the first negative electrode plate, and Cg is the capacity per unit volume of the second negative electrode plate. The number of interposed negative electrode plates are set in view of the capacity per unit volume of the two types of negative electrode plates, thereby suppressing the expansion of the electrode plate effectively while increasing the capacity of the battery to a greater extent.

In some embodiments, n is greater than or equal to 1.

In some embodiments, the capacity per unit volume of the first negative electrode plate is 0.44 Ah/mL to 2.68 Ah/mL; and/or, the capacity per unit volume of the second negative electrode plate is 0.32 Ah/mL to 1.17 Ah/mL.

In some embodiments, a total number of the first negative electrode plates is less than or equal to a total number of the second negative electrode plates. This arrangement can reduce the impact of the volume expansion of the electrode plate on the battery life, and prolong the battery life.

In some embodiments, an areal capacity density ratio of any one of the positive electrode plates to any one of the negative electrode plates is 1.01 ≤ C_{negative}/Cₚₒₛᵢₜᵢᵥₑ ≤ 1.2, where the areal capacity density is a capacity per unit area of an active layer on a single side of the positive electrode plate or negative electrode plate. By setting the areal capacity density of the negative electrode plate to be greater than the areal capacity density of the positive electrode plate, this application prevents overcharging of the negative electrode, suppresses the formation of lithium dendrites, and improves battery safety.

In some embodiments, an areal mass density of the first negative electrode plate is 2.63 mg/cm² to 10.16 mg/cm²; and/or, an areal mass density of the second negative electrode plate is 6.06 mg/cm² to 13.21 mg/cm². By controlling the areal mass density of the negative electrode plate to fall within a reasonable range, this application endows the battery with a relatively high energy density.

In some embodiments, the first negative electrode plate includes a first active layer, and a mass fraction of a negative active material in the first active layer is greater than or equal to 90% and less than or equal to 95.5%; and/or, the second negative electrode plate includes a second active layer, and a mass fraction of a negative active material in the second active layer is greater than or equal to 96%. The total content of the active material in the active layer can be determined based on the content of the active material that produces a weak volume expansion effect. For example, the total content of the active material in the active layer may be determined based on the silicon content. The higher the silicon content, the lower the total proportion of the active material. A high silicon content brings a stronger volume effect and deteriorates the resistance. Therefore, a larger amount of binder and conductive agent needs to be added. With the silicon content being 10% to 50%, the total proportion of the active material in the active layer is greater than or equal to 90% and less than or equal to 97%, thereby effectively suppressing the volume expansion. The second negative electrode plate does not much incur the volume effect and the conductivity problem. Therefore, to the extent that the processing performance is not impaired, the content of the active material is theoretically as high as practicable. The minimum mass percent of the active material is 96%.

In some embodiments, the first negative electrode plate includes a silicon-based electrode plate. An active material in the silicon-based electrode plate includes one or more of a pure silicon material, a silicon-carbon material, or a silicon-oxygen material. The silicon-oxygen material is preferably one or more of a pre-lithiated silicon-oxygen compound or a pre-magnesiated silicon-oxygen compound.

In some embodiments, a mass fraction of silicon in the active material of the silicon-based electrode plate is 10% to 50%, and a mass fraction of graphite in the active material of the silicon-based electrode plate is 40% to 85.5%.

In some embodiments, the second negative electrode plate includes a graphite electrode plate. An active material in the graphite electrode plate includes artificial graphite and/or natural graphite. The graphite electrode is of relatively high conductivity and produces a weak volume effect, and can work together with a silicon negative electrode plate to alleviate the volume expansion of the silicon negative electrode plate and improve the conductivity of the battery.

In some embodiments, an areal mass density of the positive electrode plate is 12 mg/cm² to 30 mg/cm². This setting can increase the energy density of the battery.

In some embodiments, a compaction density of the positive electrode plate is 2.3 g/cm³ to 4 g/cm³. This setting can increase the energy density of the battery.

In some embodiments, the positive electrode plate includes a positive active layer. A mass fraction of a positive active material in the positive active layer is greater than or equal to 97%.

In some embodiments, the positive electrode plate includes one or more of a lithium iron phosphate electrode plate, a lithium cobalt oxide electrode plate, a lithium nickel cobalt manganese oxide electrode plate, or a lithium manganese iron phosphate electrode plate. This setting can increase the energy density of the battery.

In some embodiments, the battery cell further includes a separator. The separator is configured to implement isolation between a positive electrode plate and a negative electrode plate that are adjacent to each other. The separator is folded in a Z-shape. The positive electrode plates and the negative electrode plates are alternately inserted in folds of the stacked separator. This setting can improve the production efficiency of the battery.

A second aspect of this application provides a stacked-type battery. The stacked-type battery includes a housing and the battery cell disclosed in the first aspect of this application.

The stacked-type battery of this application contains the battery cell disclosed herein, and therefore, achieves at least the same advantages as the battery cell.

A third aspect of this application provides an electrical device. The electrical device includes the stacked-type battery disclosed in the second aspect of this application.

The electrical device of this application contains the stacked-type battery disclosed herein, and therefore, achieves at least the same advantages as the stacked-type battery.

The foregoing description is merely an overview of the technical solutions of this application. Some specific embodiments of this application are described below illustratively to enable a clearer understanding of the technical solutions of this application, enable implementation of the technical solutions based on the subjectmatter hereof, and make the foregoing and other objectives, features, and advantages of this application more evident and comprehensible.

### BRIEF DESCRIPTION OF DRAWINGS

To describe the technical solutions of this application more clearly, the following outlines the drawings to be used in this application. Evidently, the drawings outlined below are merely a part of embodiments of this application. A person of ordinary skill in the art may derive other drawings from such drawings without making any creative efforts.
FIG. 1 is a three-dimensional schematic structural diagram of a secondary battery according to an embodiment of this application;
FIG. 2 is a front view of a battery cell according to an embodiment of this application;
FIG. 3 is a schematic arrangement diagram of a negative electrode plate of a battery cell according to an embodiment of this application;
FIG. 4 is a three-dimensional schematic structural diagram of a battery cell according to an embodiment of this application; and
FIG. 5 is a three-dimensional schematic structural diagram of an electrical device according to this application.

List of reference numerals: 100. secondary battery; 10. battery cell; 1. positive electrode plate; 2. negative electrode plate; 3. separator; 21. first negative electrode plate; 22. second negative electrode plate.

### DETAILED DESCRIPTION OF EMBODIMENTS

The following describes this application in more detail with reference to specific embodiments. Understandably, the specific embodiments are merely intended to illustrate this application but not intended to limit the scope of this application.

For brevity, some specific numerical ranges are disclosed herein for illustrative purpose only. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description herein, unless otherwise specified, the term "or" is inclusive. In other words, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

It is hereby noted that in the description herein, unless otherwise specified, a range defined by a numerical value qualified by "at least" or "at most" includes this numerical value, and the word "more" in the phrase "one or more of" means at least two.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application).

The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "a plurality of" means two or more (including two). Similarly, "a plurality of groups" means two or more groups (including two groups), and "a plurality of pieces" means two or more pieces (including two pieces).

The inventor hereof finds through extensive research that a negative electrode plate in a conventional battery is typically prepared from a silicon-based material and other active materials. Silicon-based materials produce a considerable volume effect and are of low conductivity. Consequently, the negative electrode plate expands during charge-discharge cycling, thereby potentially causing a binder in the electrode plate to fail, and making material powder fall off the electrode plate, and in turn, leading to irreversible loss of the capacity of the electrode plate.

### Secondary battery

A secondary battery is a battery that is reusable through activation of an active material in the battery by charging the battery that has been discharged.

Generally, a secondary battery includes a battery cell (a positive electrode plate, a negative electrode plate, and a separator), an electrolyte solution, and a housing. In a charge-and-discharge cycle of the battery, active ions are shuttled between the positive electrode plate and the negative electrode plate by intercalation and deintercalation. The separator is disposed between the positive electrode plate and the negative electrode plate to serve an isolation purpose. The electrolyte solution serves to conduct ions between the positive electrode plate and the negative electrode plate.

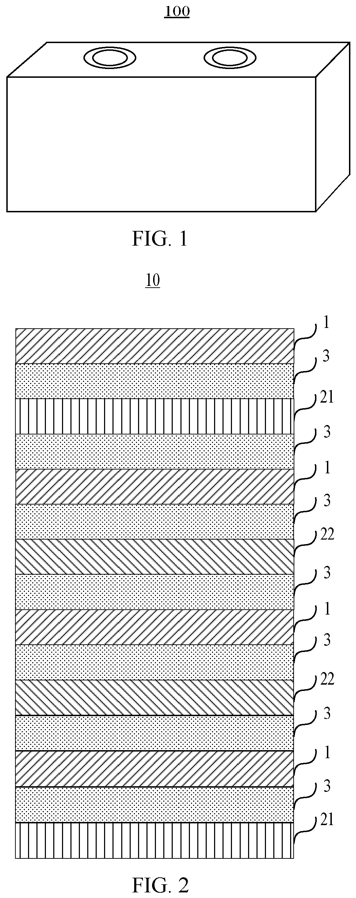

The shape of the secondary battery is not particularly limited in this application, and may be cylindrical, prismatic, or any other shape. As shown in FIG. 1. FIG. 1 is a three-dimensional schematic structural diagram of a secondary battery according to an embodiment of this application.

As an example, the secondary battery 100 includes a housing. The housing is configured to package the positive electrode plate, the negative electrode plate, and the electrolyte solution. As an example, the housing of the secondary battery 100 may be a hard shell such as a hard plastic shell, an aluminum shell, or a steel shell. Alternatively, the housing of the secondary battery 100 may be a soft package such as a pouch-type soft package. The material of the soft package may be plastic such as one or more of polypropylene (PP), polybutylene terephthalate (PBT), or polybutylene succinate (PBS).

The method for preparing the secondary battery in this application is well-known. In some embodiments, the positive electrode plate, the separator, the negative electrode plate, the electrolyte solution, and the housing may be assembled to form a secondary battery. An example of the method for preparing the secondary battery is: assembling the positive electrode plate, the separator, and the negative electrode plate to form a battery cell by winding and/or stacking, placing the battery cell into a housing, performing drying and then injecting an electrolyte solution, and performing steps such as vacuum sealing, standing, chemical formation, and shaping to obtain a secondary battery. A secondary battery may include a plurality of battery cells. The plurality of battery cells may be connected in series, parallel, or series-and-parallel pattern.

In an embodiment, the secondary battery of this application is a stacked-type battery.

### Battery cell

An embodiment of this application provides a battery cell. The battery cell includes at least one electrode assembly. The electrode assembly includes a positive electrode plate and a negative electrode plate. The negative electrode plate includes a first negative electrode plate and a second negative electrode plate. A capacity per unit volume of the first negative electrode plate is greater than a capacity per unit volume of the second negative electrode plate. At least one positive electrode plate is disposed between two adjacent first negative electrode plates, and at least one second negative electrode plate is disposed between the two adjacent first negative electrode plates.

In some embodiments, for example, the number of positive electrode plates may be set to a plural number, such as two, three, four, or the like; and the number of negative electrode plates may be set to a plural number, such as two, three, four, five, six, seven, or the like. The number of second negative electrode plates disposed between two adjacent first negative electrode plates among the negative electrode plates may be one, two, three, or the like. For example, when the number of negative electrode plates is five, the number of first negative electrode plates is two, the number of second negative electrode plates is three, and one second negative electrode plate is disposed between two adjacent first negative electrode plates. The number of positive electrode plates disposed between two adjacent first negative electrode plates may be one, two, three, or the like. In one implementation, one positive electrode plate is disposed between every two adjacent negative electrode plates. In other words, whether one first negative electrode plate is adjacent to another first negative electrode plate, or a first negative electrode plate is adjacent to a second negative electrode plate, or one second negative electrode plate is adjacent to another second negative electrode plate, one positive electrode plate is disposed between two adjacent negative electrode plates. In an alternative implementation, when a first negative electrode plate is adjacent to a second negative electrode plate, no positive electrode plate is disposed between the two negative electrode plates.

As shown in FIG. 2, FIG. 2 is a front view of a battery cell according to an embodiment of this application. The battery cell 10 specifically includes four positive electrode plates 1 and four negative electrode plates 2. Each positive electrode plate 1 is separated from a corresponding negative electrode plate 2 by a separator 3. The number of the first negative electrode plates 21 is two, the number of the second negative electrode plates 22 is two, and two second negative electrode plates 22 are disposed between two adjacent first negative electrode plates 21. In another embodiment, for example, the number of the positive electrode plates 1 is five, and the number of the negative electrode plates 2 is five. Among such electrode plates, the number of first negative electrode plates 21 is two, the number of second negative electrode plates 22 is three, and three second negative electrode plates 22 are disposed between two adjacent first negative electrode plates 21.

### Positive electrode plate

In a secondary battery, the positive electrode plate typically includes a positive current collector and a positive active layer disposed on the positive current collector. The positive active layer includes a positive active material. The positive current collector may be a conventional metal foil or a composite current collector. For example, the composite current collector by be formed by disposing a metal material on a polymer substrate. As an example, the positive current collector may be an aluminum foil.

In some embodiments, the positive electrode plate includes one or more of a lithium iron phosphate electrode plate, a lithium cobalt oxide electrode plate, a lithium nickel cobalt manganese oxide electrode plate, or a lithium manganese iron phosphate electrode plate. Lithium iron phosphate is a relatively safe positive active material represented by a chemical formula LiFePO₄, and contains no heavy metal elements that are harmful to the human body. The theoretical specific capacity of lithium iron phosphate is 170 mAh/g, and a practical specific capacity of lithium iron phosphate may exceed 140 mAh/g (0.2C, 25 °C). A cobalt oxide lithium-ion battery is a lithium-ion battery that uses lithium cobalt oxide as a positive active material. The electrochemical performance of this battery is superior. The lithium cobalt oxide is represented by a chemical formula LiCoO₂, with a capacity fading rate being less than 0.05%, and with a first-cycle specific discharge capacity being greater than 135 mAh/g. The batteries are of stable performance and high consistency. The positive active material is easy to synthesize in a production process, and is superior in safety performance. Lithium nickel cobalt manganese oxide is a commonly used ternary positive active material represented by a chemical formula LiNiₓCo_{y}Mn_{1-x-y}O₂. Lithium nickel cobalt manganese oxide possesses a high energy density, a theoretical capacity of up to 280 mAh/g, and a practical capacity of more than 150 mAh/g. The lithium nickel cobalt manganese oxide exhibits superior cycle performance and excellent cycle stability at both normal temperature and high temperature. Preferably, the positive electrode plate is a ternary lithium nickel cobalt manganese oxide electrode plate.

In some embodiments, the mass fraction of the positive active material in the positive active layer is greater than or equal to 97%. For example, the mass fraction of the positive active material in the positive active layer is greater than or equal to 97%, 98%, or 99%. The positive active material in the positive active layer may include any one of the above active materials. Different from the negative electrode plate, the positive electrode plate is not prone to incur volume expansion and the conductivity problem. Therefore, to the extent that the processing performance is not impaired, the content of the active material is theoretically as high as practicable. The minimum mass percent of the active material is 97%. By controlling the content of the positive active material in the positive active layer to fall within the specified range, this application can further increase the energy density of the battery while maintaining good cycle performance and safety performance of the battery.

In some embodiments, an areal mass density of the positive electrode plate is 12.0 mg/cm² to 30 mg/cm². The mass of active material per unit area on the electrode plate is referred to as areal mass density of the electrode plate. The areal mass density of the electrode plate is an important factor in determining the consistency of batteries. For batteries of the same capacity, the higher the areal mass density, the smaller the amount of inactive materials (such as copper foil, aluminum foil, and tabs), and the higher the energy density of the battery. However, when the areal mass density is excessively high, it is difficult for the electrolyte solution to infiltrate the entire electrode, and the gravimetric capacity decreases, thereby being unfavorable to the improvement of energy density. Therefore, the areal mass density of the positive electrode plate needs to be controlled within an appropriate range. For example, the areal mass density may be measured by performing same-point tracking or another measurement method by use of an X/β-ray areal density meter. For example, the areal mass density of the positive electrode plate may be 18 mg/cm² to 24 mg/cm², 19 mg/cm² to 25 mg/cm², 26 mg/cm² to 30 mg/cm², 17 mg/cm² to 23 mg/cm², or 12 mg/cm² to 16 mg/cm². By controlling the areal mass density of the positive electrode plate to fall within the specified range, this application can further increase the energy density of the battery while maintaining good cycle performance and safety performance of the battery.

In some embodiments, a compaction density of the positive electrode plate is 2.3 g/cm³ to 4 g/cm³. Generally, to the extent that the compaction is tolerable by the material, the higher the compaction density of the positive electrode plate, the higher the capacity of the battery can be. Therefore, the compaction density is regarded as one of the reference indicators of energy density. However, an excessively high compaction density not only fails to improve the specific capacity of the battery, but also severely reduces the specific capacity and cycle performance of the battery. Therefore, the compaction density of the positive electrode plate needs to be controlled within an appropriate range. For example, the compaction density of the positive electrode plate may be 2.4 g/cm³ to 3.5 g/cm³, 2.5 g/cm³ to 3.4 g/cm³, 2.6 g/cm³ to 3.3 g/cm³, 2.7 g/cm³ to 3.2 g/cm³, 2.8 g/cm³ to 3.8 g/cm³, or 3.1 g/cm³ to 3.6 g/cm³. By controlling the compaction density of the positive electrode plate to fall within the specified range, this application can further increase the energy density of the battery while maintaining good cycle performance and safety performance of the battery.

### Negative electrode plate

In a secondary battery, the negative electrode plate typically includes a negative current collector and a negative active layer disposed on the negative current collector. The negative active layer includes a negative active material.

The negative current collector may be a conventional metal foil or a composite current collector (for example, the composite current collector by be formed by disposing a metal material on a polymer substrate). As an example, the negative current collector may be a copper foil. Further, the negative active layer generally optionally includes a binder, a conductive agent, and other optional agents. As an example, the conductive agent may be one or more of superconductive carbon, acetylene black, carbon black, Ketjen black, carbon dots, carbon nanotubes, graphene, or carbon nanofibers. As an example, the binder may be one or more of styrene-butadiene rubber (SBR), water-based acrylic resin (water-based acrylic resin), polyvinylidene difluoride (PVDF), polytetrafluoroethylene (PTFE), poly(ethylene-co-vinyl acetate) (EVA), polyvinyl alcohol (PVA), or polyvinyl butyral (PVB). As an example, the other optional agents may be a thickener and a dispersant (for example, sodium carboxymethyl cellulose CMC-Na), or a PTC thermistor material.

The negative electrode plate provided herein includes a first negative electrode plate and a second negative electrode plate. A capacity per unit volume of the first negative electrode plate is greater than a capacity per unit volume of the second negative electrode plate. At least one second negative electrode plate is disposed between the two adjacent first negative electrode plates. Generally, when the capacity per unit volume of the negative electrode plate is high, the volume expansion rate of the negative electrode plate is also high, thereby resulting in large expansion of the negative electrode plate during charge-discharge cycling, and even potentially leading to failure of the electrode plate. Similarly, when the capacity per unit volume of the negative electrode plate is low, the volume expansion rate is also low. In this application, the negative electrode plate of a relatively low capacity per unit volume is disposed between the negative electrode plates of a relatively high capacity per unit volume, thereby alleviating the volume expansion of the negative electrode plate of a high capacity, reducing battery failure caused by volume expansion of the electrode plate, and improving the energy density and storage performance of the battery.

In some embodiments, the first negative electrode plate includes a first active layer. The mass fraction of a negative active material in the first active layer is greater than or equal to 90% and less than or equal to 95.5%. For example, the mass fraction of the negative active material in the first active layer is 91%, 92%, 93%, 94%, 95%, or the like. The negative active material in the first active layer may include a silicon-based material, a selenium-based material, or the like. The total content of the active material in the active layer may be determined based on the silicon content. Because a high silicon content brings about a stronger volume effect and severer resistance deterioration, a larger amount of binder and conductive agent needs to be added. Therefore, the silicon content in the first negative electrode plate is relatively lower. When the silicon content is 10% to 50%, the total proportion of the active material in the active layer is greater than or equal to 90% and less than or equal to 97%, thereby being adaptable to volume expansion. By controlling the content of the negative active material in the first active layer to fall within the specified range, this application can further increase the energy density of the battery while controlling the volume effect.

In some embodiments, the first negative electrode plate includes a silicon-based electrode plate. An active material in the silicon-based electrode plate includes one or more of a pure silicon material, a silicon-carbon material, or a silicon-oxygen material. The silicon-oxygen material is preferably one or more of a pre-lithiated silicon-oxygen compound or a pre-magnesiated silicon-oxygen compound. The active material is preferably a silicon-carbon material (a silicon-carbon material deposited through silane by using porous hard carbon as a skeleton). The silicon-based negative electrode possesses the advantages of a high energy density, wide distribution of raw materials, and an appropriate discharge platform, and is considered to be a promising negative active material. By using elemental silicon as an active material, the theoretical specific capacity of the negative electrode is up to 4200 mAh/g, being more than 10 times that of a negative electrode with graphite as an active material. The theoretical specific capacity of a silicon-carbon negative electrode and a silicon-oxygen negative electrode is also much higher than that of a graphite negative electrode. The high gravimetric capacity of the silicon-based electrode plate increases the energy density of the battery, and also increases the volumetric energy density, and makes the battery smaller in size. In view of such advantages, the silicon-carbon electrode plate is used as a preferred first negative electrode plate.

In some embodiments, a mass fraction of silicon in the active material of the silicon-based electrode plate is 10% to 50%, and a mass fraction of graphite in the active material of the silicon-based electrode plate is 40% to 85.5%. An active material containing silicon and graphite is also referred to as a silicon-carbon negative electrode material. The silicon-carbon negative electrode material is a new type of negative electrode material that uses graphite as a dispersion matrix and that uses silicon as an active material. Although the elemental-silicon electrode plate possesses a relatively high specific capacity, the elemental-silicon electrode plate expands and shrinks in volume during charging and discharging (the volume expansion and shrinkage rate of the elemental-silicon electrode plate during charging and discharging is as high as 320%), thereby producing large mechanical stress. After repeated cycling, silicon particles are prone to break and pulverize, thereby causing the negative electrode to fail. Therefore, a silicon-based electrode plate that uses porous graphite as a skeleton is preferred, and can further increase the energy density of the battery while controlling the volume effect. In these embodiments, for example, the mass fraction of silicon in the active material of the silicon-based electrode plate may be 11%, 15%, 19%, 29%, 30%, 35%, 38%, 42%, 45%, or the like; and the mass fraction of graphite in the active material of the silicon-based electrode plate may be 77%, 71%, 67%, 61%, 53%, 51%, 49%, 45%, 43%, 41%, or the like. The silicon content and graphite content in the silicon-based electrode plate are controlled within the specified ranges. During charging, the expansion is controlled to occur inside the hard carbon pores, thereby further reducing the expansion effect of the silicon-based electrode plate. Silicon is deposited inside the pores of the porous hard carbon. The silicon-carbon material is highly resistant to compression, and is not prone to break during cold pressing. The expansion during the charging occurs inside the hard carbon pores, thereby reducing the expansion effect of the silicon-based electrode plate. Therefore, the silicon-carbon material that uses porous hard carbon as a skeleton is preferred.

In some embodiments, the second negative electrode plate includes a second active layer, and a mass fraction of a negative active material in the second active layer is greater than or equal to 96%. For example, the mass fraction of the negative active material in the second active layer is greater than or equal to 97%, 98%, or 99%. The negative active material in the second active layer may include graphite. Different from the silicon-based electrode plate, the graphite electrode plate is not prone to incur volume expansion and the conductivity problem. Therefore, to the extent that the processing performance is not impaired, the content of the active material is theoretically as high as practicable. The minimum mass percent of the active material is 96%. By controlling the content of the negative active material in the second active layer to fall within the specified range, this application can further increase the energy density of the battery while maintaining good cycle performance and safety performance of the battery.

In some embodiments, the second negative electrode plate includes a graphite electrode plate. An active material in the graphite electrode plate includes artificial graphite and/or natural graphite. Graphite negative electrode materials exhibit the advantages such as a wide source and an abundant reserve of raw materials, a high tap density after modification, relatively stable electrochemical performance, and the practical specific capacity density being close to the theoretical specific capacity. Therefore, a graphite electrode plate is used as a second negative electrode plate to reduce production cost and improve efficiency.

In some embodiments, M second negative electrode plates are disposed between the two adjacent first negative electrode plates, where 1 ≤ M ≤ 2.5n, n = Cs/Cg, M is an integer greater than or equal to 1, Cs is the capacity per unit volume of the first negative electrode plate, and Cg is the capacity per unit volume of the second negative electrode plate. In a preferred embodiment, M satisfies 1 ≤ M ≤ 2n. For example, the number M of second negative electrode plates may be 1, 2, 3, or the like. The battery cell contains the first negative electrode plate, and therefore, is endowed with a relatively high energy density. In addition, the first negative electrode plate and the second negative electrode plate are stacked up alternately. This design can alleviate the expansion effect of the electrode plate and reduce the failure of the battery cell caused by the expansion of the electrode plate, and can also maximize the capacity of the battery. For example, when the first negative electrode plate is a silicon-based electrode plate and the second negative electrode plate is a graphite electrode plate, if the volume capacity of the silicon-based electrode plate is higher, the proportion of the silicon-based material contained in the electrode plate may be higher, and the expansion effect is stronger. However, in the technical solution in which the two types of electrode plates are stacked up, the graphite negative electrode plate can alleviate the degree of expansion and pulverization of the silicon-based negative electrode plate. Therefore, in contrast to the conventional practice, the electrochemical performance of the battery in this technical solution is excellent, especially in terms of cycle performance and storage performance. Therefore, the second negative electrode plate is stacked between the two silicon-based electrode plates according to the rule of 1 ≤ M ≤ 2.5n to disperse and alleviate the expansion effect of the first negative electrode plate. In some embodiments, n is greater than or equal to 1.

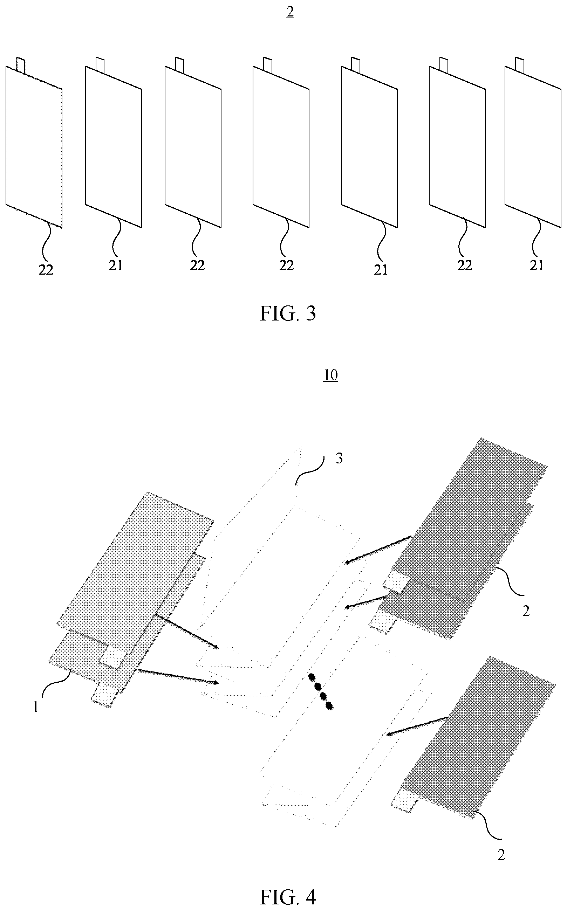

As shown in FIG. 3, FIG. 3 is a schematic arrangement diagram of a negative electrode plate of a battery cell according to an embodiment of this application. In this embodiment, the first negative electrode plates 21 are silicon-based electrode plates, and the number of the first negative electrode plates is three. The second negative electrode plates 22 are graphite electrode plates, and the number of the second negative electrode plates is four. From left to right, two graphite electrode plates are disposed between the first silicon-based electrode plate and the second silicon-based electrode plate, one graphite electrode plate is disposed between the second silicon-based electrode plate and the third silicon-based electrode plate, and one positive electrode plate (not shown in the drawing) is disposed between every two negative electrode plates. In other embodiments, the number of graphite electrode plates disposed between two silicon-based electrode plates may vary, for example, may be one, two, three, four, or the like, and one positive electrode plate is also disposed between every two negative electrode plates.

For example, in an embodiment, the first negative electrode plate is a silicon-based electrode plate, and the second negative electrode plate is a graphite electrode plate. By stacking up the silicon-containing negative electrode plate and the graphite negative electrode plate, the silicon-containing negative electrode plate in the battery can increase the energy density, and the two types of electrode plates stacked up can alleviate the expansion effect of the silicon-based electrode plate, and reduce the battery failure caused by the volume expansion of the electrode plate, thereby increasing the battery life. This design can increase the energy density significantly and improve the storage performance.

In some embodiments, the capacity per unit volume of the first negative electrode plate is 0.44 Ah/mL to 2.68 Ah/mL; and/or, the capacity per unit volume of the second negative electrode plate is 0.32 Ah/mL to 1.17 Ah/mL.

In some embodiments, a total number of the first negative electrode plates is less than or equal to a total number of the second negative electrode plates. By setting the total number of the first negative electrode plates to be less than or equal to the total number of the second negative electrode plates, the volume expansion effect of the negative electrode plates is alleviated, the failure of the battery cells caused by the expansion of the negative electrode plates is reduced, and the battery is endowed with a relatively high capacity.

In some embodiments, an areal capacity density ratio of any one of the positive electrode plates to any one of the negative electrode plates is 1.01 ≤ C_{negative}/Cₚₒₛᵢₜᵢᵥₑ ≤ 1.2, where the areal capacity density is a capacity per unit area of an active layer on a single side of the positive electrode plate or negative electrode plate. Areal capacity density = areal mass density × gravimetric capacity of active material × mass fraction of active material in the active layer. In the relational expression above, C_{negative} represents the capacity of a coating (active layer) per unit area on a single side of the negative electrode plate (mAh/cm²), and Cₚₒₛᵢₜᵢᵥₑ represents the capacity of the coating per unit area on single side of the positive electrode plate (mAh/cm²). For example, in a preferred embodiment, 1.03 ≤ C_{negative}/Cₚₒₛᵢₜᵢᵥ, ≤ 1.1. In another preferred embodiment, 1.05 ≤ C_{negative}/Cₚₒₛᵢₜᵢᵥₑ ≤ 1.1. By setting the capacity of the active layer per unit area on a single side of the negative electrode plate to be greater than the capacity of the active layer per unit area on a single side of the positive electrode plate, this application can prevent overcharging of the negative electrode, suppress the formation of lithium dendrites, and improve the safety of the battery cell.

In some embodiments, an areal mass density of the first negative electrode plate is 2.63 mg/cm² to 10.16 mg/cm²; and/or, an areal mass density of the second negative electrode plate is 6.06 mg/cm² to 13.21 mg/cm². As mentioned earlier, the areal mass density of the electrode plate is an important factor in determining the consistency of batteries. For batteries of the same capacity, the higher the areal mass density, the smaller the amount of inactive materials (such as copper foil, aluminum foil, and tabs), and the higher the energy density of the battery. However, when the areal mass density is excessively high, it is difficult for the electrolyte solution to infiltrate the entire electrode, and the gravimetric capacity decreases, thereby being unfavorable to the improvement of energy density. Therefore, the areal mass density of the negative electrode plate also needs to be controlled within an appropriate range. The areal mass density of the negative electrode plate may be measured by multi-unit tracking measurement technology, laser ray integrated micro-spot areal density meter, β-ray areal density meter, or the like. For example, the areal mass density of the first negative electrode plate is 3.95 mg/cm² to 9.4 mg/cm², 4.25 mg/cm² to 8.5 mg/cm², or 5.74 mg/cm² to 7.64 mg/cm². For example, the areal mass density of the second negative electrode plate is 7.96 mg/cm² to 11.10 mg/cm², 8.50 mg/cm² to 9.89 mg/cm², or 9.12 mg/cm² to 10.91 mg/cm². By controlling the areal mass density of the first negative electrode plate and the second negative electrode plate to fall within the specified range, this application can further increase the energy density of the battery while maintaining good cycle performance and safety performance of the battery.

In some embodiments, the separator is folded in a Z-shape. The positive electrode plates and the negative electrode plates are alternately inserted in folds of the stacked separator. The separator is folded in a Z-shape, and the positive electrode plates and the negative electrode plates are alternately inserted in the folds of the stacked separator, so that the production efficiency of the battery is improved.

As shown in FIG. 4, FIG. 4 is a three-dimensional schematic structural diagram of a battery cell according to another embodiment of this application. In the battery cell, the positive electrode plates 1 and the negative electrode plates 2 are alternately inserted in the folds of the Z-shape separator 3.

### Electrolyte solution

The secondary battery includes an electrolyte solution. The electrolyte solution serves to conduct ions between the positive electrode and the negative electrode. The electrolyte solution may include an electrolyte salt and a solvent.

As an example, the electrolyte salt may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato)borate (LiBOB), lithium difluorophosphate (LiPO₂F₂), lithium difluoro(bisoxalato)phosphate (LiDFOP), or lithium tetrafluoro(oxalato)phosphate (LiTFOP).

As an example, the solvent may be one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE).

As an example, the electrolyte solution further includes an additive. For example, the additive may include a negative electrode film-forming additive, a positive electrode film-forming additive, and additives that can improve some performance of the battery, for example, an additive that improves overcharge performance of the battery, an additive that improves high-temperature performance of the battery, and an additive that improves low-temperature performance of the battery.

### Electrical device

This application further provides an electrical device. The electrical device includes the secondary battery according to this application. The battery cell and the secondary battery may be used as a power supply of the electrical device, or used as an energy storage unit of the electrical device. The electrical device may be, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The battery cell or the secondary battery may be selected for use in the electrical device depending on the use requirements.

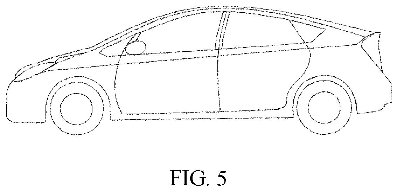

FIG. 5 shows an electrical device as an example. The electrical device may be a battery electric vehicle, a hybrid electric vehicle, or a plug-in hybrid electric vehicle. The electrical device may employ a plurality of secondary batteries in order to meet the requirements of the electrical device on a high power and a high energy density of the secondary battery.

In another example, the electrical device may be a mobile phone, a tablet computer, or a laptop computer. The electrical device is generally required to be thin and light, and may use a battery cell as a power supply.

The beneficial effects of this application are further described below with reference to embodiments.

To make the technical problems to be solved by an embodiment of this application, and the technical solutions and beneficial effects of this application clearer, the following describes this application in further detail with reference to embodiments and drawings. Evidently, the described embodiments are merely a part of but not all of the embodiments of this application. The following description of at least one exemplary embodiment is merely illustrative, and is in no way intended as a limitation on this application or the use thereof. All other embodiments derived by a person of ordinary skill in the art based on the embodiments of this application without making any creative efforts still fall within the protection scope of this application.

### I. Preparing a battery

### Embodiment 1

### (1) Preparing a positive electrode plate

Mixing the lithium nickel cobalt manganese oxide LiNi_{0.8}Co_{0.1}Mn_{0.1}O₂ (NCM811), conductive carbon black (Super P) as a conductive agent, and polyvinylidene difluoride (PVDF) as a binder at a mass ratio of 97.5: 1.5: 1 in an appropriate amount of N-methylpyrrolidone (NMP) solvent, and stirring well to form a positive electrode slurry. Coating a surface of positive current collector aluminum foil with the positive electrode slurry, and performing oven-drying, cold-pressing, slitting, and cutting to obtain a positive electrode plate. The compaction density of the positive electrode plate is 3.5 g/cm³, the areal capacity density is 2.36 mAh/cm², and the areal mass density is 12.07 mg/cm².

### (2) Preparing a negative electrode plate

Preparing a first negative electrode plate:
Mixing artificial graphite, a silicon-based material (gravimetric capacity: 1800 to 2300 mAh/g), single-walled carbon nanotubes (the above constituents serve as negative active materials), acetylene black as a conductive agent, sodium carboxymethyl cellulose (CMC) as a thickener, styrene-butadiene rubber (SBR) as a binder at a mass ratio of 82.5: 13: 0.3: 1: 1.2: 2. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 4.53 mg/cm², compaction density 1.7 g/cm³, areal capacity density 2.6 mAh/cm², and thickness 63.3 µm. The capacity per unit volume of the resultant negative electrode plate is 0.82 Ah/mL.

### Preparing a second negative electrode plate:

Mixing artificial graphite as a negative active material, acetylene black as a conductive agent, sodium carboxymethyl cellulose (CMC) as a thickener, styrene-butadiene rubber (SBR) as a binder at a mass ratio of 97: 0.5: 1: 1.5. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 7.05 mg/cm², compaction density 1.7 g/cm³, areal capacity density 2.6 mAh/cm², and thickness 92.9 µm. The capacity per unit volume of the resultant negative electrode plate is 0.56 Ah/mL.

### (3) Preparing an electrolyte solution

Mixing ethylene carbonate (EC), ethyl methyl carbonate (EMC), and diethyl carbonate (DEC) at a volume ratio of 1: 1: 1 to obtain an organic solvent, and then dissolving a well-dried lithium salt LiPF₆ in the organic solvent in which the concentration of the lithium salt is 1 mol/L, and stirring well to obtain an electrolyte solution.

### (4) Preparing a separator

Using a 12 µm-thick polyethylene film as a separator.

### 5) Preparing a stacked-type battery

Stacking the positive electrode plate, the separator, and the negative electrode plate alternately, where the electrode plates of at least one electrode assembly are arranged in the following order: first negative electrode plate, positive electrode plate, second negative electrode plate, positive electrode plate, and first negative electrode plate, sequentially. In other words, one second negative electrode plate is disposed between two first negative electrode plates, and one positive electrode plate is disposed between two adjacent negative electrode plates. The separator is folded continuously in a Z-shape between the positive electrode plate and the negative electrode plate. The positive electrode plate and the negative electrode plate are stacked alternately in the folds to form a stacked structure, and then the stacked structure is put into a housing. Tabs are welded to the stacked structure to form an electrode assembly. The electrode assembly is vacuum-dried at 100 °C for 24 hours, and then an electrolyte solution is injected into the electrode assembly, and the electrode assembly is subjected to chemical formation and a capacity test to ultimately make a hard-shell battery that can output a voltage of 2.5 V to 4.25 V and a capacity of 65 Ah.

### Embodiment 2

The preparation method of a stacked-type battery in Embodiment 2 is similar to that in Embodiment 1 except the following differences:

### Preparing a first negative electrode plate:

Mixing artificial graphite, a silicon-based material (gravimetric capacity: 1800 to 2300 mAh/g), single-walled carbon nanotubes (the above constituents serve as negative active materials), acetylene black as a conductive agent, sodium carboxymethyl cellulose (CMC) as a thickener, styrene-butadiene rubber (SBR) as a binder at a mass ratio of 69.5: 26: 0.3: 1: 1.2: 2. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 3.38 mg/cm², compaction density 1.7 g/cm³, areal capacity density 2.6 mAh/cm², and thickness 49.8 µm. The capacity per unit volume of the resultant negative electrode plate is 1.04 Ah/mL.

### Preparing a stacked-type battery:

Stacking the positive electrode plate, the separator, and the negative electrode plate alternately, where the electrode plates of at least one electrode assembly are arranged in the following order: first negative electrode plate, positive electrode plate, second negative electrode plate, positive electrode plate, second negative electrode plate, positive electrode plate, and first negative electrode plate, sequentially. In other words, two second negative electrode plates are disposed between two first negative electrode plates, and one positive electrode plate is disposed between two adjacent negative electrode plates. The separator is folded continuously in a Z-shape between the positive electrode plate and the negative electrode plate. The positive electrode plate and the negative electrode plate are stacked alternately in the folds to form a stacked structure, and then the stacked structure is put into a housing. Tabs are welded to the stacked structure to form an electrode assembly. The electrode assembly is vacuum-dried at 100 °C for 24 hours, and then an electrolyte solution is injected into the electrode assembly, and the electrode assembly is subjected to chemical formation and a capacity test to ultimately make a hard-shell battery that can output a voltage of 2.5 V to 4.25 V and a capacity of 65 Ah.

### Embodiment 3

The preparation method of a stacked-type battery in Embodiment 3 is similar to that in Embodiment 1 except the following differences:

### Preparing a first negative electrode plate:

Mixing artificial graphite, a silicon-based material (gravimetric capacity: 1800 to 2300 mAh/g), single-walled carbon nanotubes (the above constituents serve as negative active materials), acetylene black as a conductive agent, sodium carboxymethyl cellulose (CMC) as a thickener, styrene-butadiene rubber (SBR) as a binder at a mass ratio of 85.5: 10: 0.3: 1: 1.2: 2. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 4.95 mg/cm², compaction density 1.7 g/cm³, areal capacity density 2.6 mAh/cm², and thickness 68.2 µm. The capacity per unit volume of the resultant negative electrode plate is 0.76 Ah/mL.

### Preparing a second negative electrode plate:

Mixing artificial graphite, a silicon-based material (gravimetric capacity: 1800 to 2300 mAh/g), single-walled carbon nanotubes (the above materials serve as negative active materials), acetylene black as a conductive agent, sodium carboxymethyl cellulose (CMC) as a thickener, styrene-butadiene rubber (SBR) as a binder at a mass ratio of 91.8: 3.7: 0.3: 1: 1.2: 2. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 6.14 mg/cm², compaction density 1.7 g/cm³, areal capacity density 2.6 mAh/cm², and thickness 82.3 µm. The capacity per unit volume of the resultant negative electrode plate is 0.63 Ah/mL.

### Preparing a stacked-type battery:

Stacking the positive electrode plate, the separator, and the negative electrode plate alternately, where the electrode plates of at least one electrode assembly are arranged in the following order: first negative electrode plate, positive electrode plate, second negative electrode plate, positive electrode plate, second negative electrode plate, positive electrode plate, second negative electrode plate, positive electrode plate, and first negative electrode plate, sequentially. In other words, three second negative electrode plates are disposed between two first negative electrode plates, and one positive electrode plate is disposed between two adjacent negative electrode plates. The separator is folded continuously in a Z-shape between the positive electrode plate and the negative electrode plate. The positive electrode plate and the negative electrode plate are stacked alternately in the folds to form a stacked structure, and then the stacked structure is put into a housing. Tabs are welded to the stacked structure to form an electrode assembly. The electrode assembly is vacuum-dried at 100 °C for 24 hours, and then an electrolyte solution is injected into the electrode assembly, and the electrode assembly is subjected to chemical formation and a capacity test to ultimately make a hard-shell battery that can output a voltage of 2.5 V to 4.25 V and a capacity of 65 Ah.

### Embodiment 4

The preparation method of a stacked-type battery in Embodiment 4 is similar to that in Embodiment 1 except the following differences:

### Preparing a first negative electrode plate:

Mixing artificial graphite, a silicon-based material (gravimetric capacity: 1800 to 2300 mAh/g), single-walled carbon nanotubes (the above constituents serve as negative active materials), acetylene black as a conductive agent, sodium carboxymethyl cellulose (CMC) as a thickener, styrene-butadiene rubber (SBR) as a binder at a mass ratio of 85.5: 10: 0.3: 1: 1.2: 2. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to ultimately obtain a negative electrode plate with the following parameter values: areal mass density 5.42 mg/cm², compaction density 1 g/cm³, areal capacity density 2.6 mAh/cm², and thickness 118.4 µm. The capacity per unit volume of the resultant negative electrode plate is 0.44 Ah/mL.

### Preparing a second negative electrode plate:

Mixing artificial graphite as a negative active material, acetylene black as a conductive agent, sodium carboxymethyl cellulose (CMC) as a thickener, styrene-butadiene rubber (SBR) as a binder at a mass ratio of 97: 0.5: 1: 1.5. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 7.65 mg/cm², compaction density 1 g/cm³, areal capacity density 2.6 mAh/cm², and thickness 163 µm. The capacity per unit volume of the resultant negative electrode plate is 0.32 Ah/mL.

### Embodiment 5

The preparation method of a stacked-type battery in Embodiment 5 is similar to that in Embodiment 1 except the following differences:

### Preparing a positive electrode plate:

Mixing the lithium nickel cobalt manganese oxide LiNi_{0.8}Co_{0.1}Mn_{0.1}O₂ (NCM811), conductive carbon black (Super P) as a conductive agent, and polyvinylidene difluoride (PVDF) as a binder at a mass ratio of 97.5: 1.5: 1 in an appropriate amount of N-methylpyrrolidone (NMP) solvent, and stirring well to form a positive electrode slurry. Coating a surface of positive current collector aluminum foil with the positive electrode slurry, and performing oven-drying, cold-pressing, slitting, and cutting to obtain a positive electrode plate. The compaction density of the positive electrode plate is 3.5 g/cm³, the areal capacity density is 4.43 mAh/cm², and the areal mass density is 22.59 mg/cm².

### Preparing a first negative electrode plate:

Mixing artificial graphite, a silicon-based material (gravimetric capacity: 2800 to 3500 mAh/g), single-walled carbon nanotubes (the above constituents serve as negative active materials), acetylene black as a conductive agent, sodium carboxymethyl cellulose (CMC) as a thickener, styrene-butadiene rubber (SBR) as a binder at a mass ratio of 85.5: 10: 0.3: 1: 1.2: 2. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 10.16 mg/cm², compaction density 1.7 g/cm³, areal capacity density 4.87 mAh/cm², and thickness 129.5 µm. The capacity per unit volume of the resultant negative electrode plate is 0.75 Ah/mL.

### Preparing a second negative electrode plate:

Mixing artificial graphite as a negative active material, acetylene black as a conductive agent, sodium carboxymethyl cellulose (CMC) as a thickener, styrene-butadiene rubber (SBR) as a binder at a mass ratio of 97: 0.5: 1: 1.5. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 13.21 mg/cm², compaction density 1.7 g/cm³, areal capacity density 4.87 mAh/cm², and thickness 165.4 µm. The capacity per unit volume of the resultant negative electrode plate is 0.59 Ah/mL.

### Embodiment 6

The preparation method of a stacked-type battery in Embodiment 6 is similar to that in Embodiment 1 except the following differences:

### Preparing a positive electrode plate:

Mixing the lithium nickel cobalt manganese oxide LiNi_{0.8}Co_{0.1}Mn_{0.1}O₂ (NCM811), conductive carbon black (Super P) as a conductive agent, and polyvinylidene difluoride (PVDF) as a binder at a mass ratio of 97.5: 1.5: 1 in an appropriate amount of N-methylpyrrolidone (NMP) solvent, and stirring well to form a positive electrode slurry. Coating a surface of positive current collector aluminum foil with the positive electrode slurry, and performing oven-drying, cold-pressing, slitting, and cutting to obtain a positive electrode plate. The compaction density of the positive electrode plate is 3.5 g/cm³, the areal capacity density is 4.43 mAh/cm², and the areal mass density is 22.59 mg/cm².

### Preparing a first negative electrode plate:

Mixing artificial graphite, a silicon-based material (gravimetric capacity: 2800 to 3500 mAh/g), single-walled carbon nanotubes (the above constituents serve as negative active materials), acetylene black as a conductive agent, sodium carboxymethyl cellulose (CMC) as a thickener, styrene-butadiene rubber (SBR) as a binder at a mass ratio of 40: 50: 0.6: 1: 2: 8.4, so as to ultimately obtain a negative electrode plate with the following parameter values: areal mass density 2.63 mg/cm², compaction density 1.7 g/cm³, areal capacity density 4.87 mAh/cm², and thickness 40.9 µm. The capacity per unit volume of the resultant negative electrode plate is 2.38 Ah/mL.

### Preparing a second negative electrode plate:

Mixing artificial graphite as a negative active material, acetylene black as a conductive agent, sodium carboxymethyl cellulose (CMC) as a thickener, styrene-butadiene rubber (SBR) as a binder at a mass ratio of 97: 0.5: 1: 1.5. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 13.21 mg/cm², compaction density 1.7 g/cm³, areal capacity density 4.87 mAh/cm², and thickness 165.4 µm. The capacity per unit volume of the resultant negative electrode plate is 0.76 Ah/mL.

### Preparing a stacked-type battery:

Stacking the positive electrode plate, the separator, and the negative electrode plate alternately, where the electrode plates of at least one electrode assembly are arranged in the following order: first negative electrode plate, positive electrode plate, second negative electrode plate, positive electrode plate, second negative electrode plate, positive electrode plate, and first negative electrode plate, sequentially. In other words, two second negative electrode plates are disposed between two first negative electrode plates, and one positive electrode plate is disposed between two adjacent negative electrode plates. The separator is folded continuously in a Z-shape between the positive electrode plate and the negative electrode plate. The positive electrode plate and the negative electrode plate are stacked alternately in the folds to form a stacked structure, and then the stacked structure is put into a housing. Tabs are welded to the stacked structure to form an electrode assembly. The electrode assembly is vacuum-dried at 100 °C for 24 hours, and then an electrolyte solution is injected into the electrode assembly, and the electrode assembly is subjected to chemical formation and a capacity test to ultimately make a hard-shell battery that can output a voltage of 2.5 V to 4.25 V and a capacity of 65 Ah.

### Embodiment 7

The preparation method of a stacked-type battery in Embodiment 7 is similar to that in Embodiment 1 except the following differences:

### Preparing a positive electrode plate:

Mixing the lithium nickel cobalt manganese oxide LiNi_{0.8}Co_{0.1}Mn_{0.1}O₂ (NCM811), conductive carbon black (Super P) as a conductive agent, and polyvinylidene difluoride (PVDF) as a binder at a mass ratio of 97.5: 1.5: 1 in an appropriate amount of N-methylpyrrolidone (NMP) solvent, and stirring well to form a positive electrode slurry. Coating a surface of positive current collector aluminum foil with the positive electrode slurry, and performing oven-drying, cold-pressing, slitting, and cutting to obtain a positive electrode plate. The compaction density of the ultimately obtained positive electrode plate is 3.5 g/cm³, the areal capacity density is 4.43 mAh/cm², and the areal mass density is 22.59 mg/cm².

### Preparing a first negative electrode plate:

Mixing artificial graphite, a silicon-based material (gravimetric capacity: 2800 to 3500 mAh/g), single-walled carbon nanotubes (the above constituents serve as negative active materials), acetylene black as a conductive agent, sodium carboxymethyl cellulose (CMC) as a thickener, styrene-butadiene rubber (SBR) as a binder at a mass ratio of 40: 50: 0.6: 1: 2: 8.4. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 2.63 mg/cm², compaction density 2 g/cm³, areal capacity density 4.87 mAh/cm², and thickness 36.3 µm. The capacity per unit volume of the resultant negative electrode plate is 2.68 Ah/mL.

### Preparing a second negative electrode plate:

Mixing artificial graphite, a silicon-based material (gravimetric capacity: 2800 to 3500 mAh/g), single-walled carbon nanotubes (the above materials serve as negative active materials), acetylene black as a conductive agent, sodium carboxymethyl cellulose (CMC) as a thickener, styrene-butadiene rubber (SBR) as a binder at a mass ratio of 85.5: 10: 0.3: 1: 1.2: 2. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 7.32 mg/cm², compaction density 2 g/cm³, areal capacity density 4.87 mAh/cm², and thickness 83.2 µm. The capacity per unit volume of the resultant negative electrode plate is 1.17 Ah/mL.

### Preparing a stacked-type battery:

Stacking the positive electrode plate, the separator, and the negative electrode plate alternately, where the electrode plates of at least one electrode assembly are arranged in the following order: first negative electrode plate, positive electrode plate, second negative electrode plate, positive electrode plate, second negative electrode plate, positive electrode plate, second negative electrode plate, positive electrode plate, and first negative electrode plate, sequentially. In other words, three second negative electrode plates are disposed between two first negative electrode plates, and one positive electrode plate is disposed between two adjacent negative electrode plates. The separator is folded continuously in a Z-shape between the positive electrode plate and the negative electrode plate. The positive electrode plate and the negative electrode plate are stacked alternately in the folds to form a stacked structure, and then the stacked structure is put into a housing. Tabs are welded to the stacked structure to form an electrode assembly. The electrode assembly is vacuum-dried at 100 °C for 24 hours, and then an electrolyte solution is injected into the electrode assembly, and the electrode assembly is subjected to chemical formation and a capacity test to ultimately make a hard-shell battery that can output a voltage of 2.5 V to 4.25 V and a capacity of 65 Ah.

### Comparative Embodiment 1

The difference from Embodiment 1 is that the battery contains only one type of negative electrode plate, and the negative electrode plate is prepared in the same way as a silicon-containing negative electrode plate. The specific preparation method is: Mixing artificial graphite, a silicon-based material (gravimetric capacity: 1800 to 2300 mAh/g), single-walled carbon nanotubes (the above constituents serve as negative active materials), acetylene black as a conductive agent, sodium carboxymethyl cellulose (CMC) as a thickener, styrene-butadiene rubber (SBR) as a binder at a mass ratio of 91.5: 4: 0.3: 1: 1.2: 2. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 6.07 mg/cm², areal capacity density 2.6 mAh/cm², compaction density 1.7 g/cm³, and thickness 81.3 µm.

### Preparing a stacked-type battery:

Stacking the positive electrode plate, the separator, and the negative electrode plate alternately, where the electrode plates of at least one electrode assembly are arranged in the following order: negative electrode plate, positive electrode plate, and negative electrode plate, sequentially. In other words, the two adjacent negative electrode plates are of the same type. The separator is folded continuously in a Z-shape between the positive electrode plate and the negative electrode plate. The positive electrode plate and the negative electrode plate are stacked alternately in the folds to form a stacked structure, and then the stacked structure is put into a housing. Tabs are welded to the stacked structure to form an electrode assembly. The electrode assembly is vacuum-dried at 100 °C for 24 hours, and then an electrolyte solution is injected into the electrode assembly, and the electrode assembly is subjected to chemical formation and a capacity test to ultimately make a hard-shell battery that can output a voltage of 2.5 V to 4.25 V and a capacity of 65 Ah.

### Comparative Embodiment 2

The difference from Embodiment 5 is that the battery contains only one type of negative electrode plate, and the negative electrode plate is prepared in the same way as a silicon-containing negative electrode plate. The specific preparation method is: Mixing artificial graphite, a silicon-based material (gravimetric capacity: 2800 to 3500 mAh/g), single-walled carbon nanotubes (the above constituents serve as negative active materials), acetylene black as a conductive agent, sodium carboxymethyl cellulose (CMC) as a thickener, styrene-butadiene rubber (SBR) as a binder at a mass ratio of 91.5: 4: 0.3: 1: 1.2: 2. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 10.07 mg/cm², areal capacity density 4.87 mAh/cm², compaction density 1.7 g/cm³, and thickness 128.4 µm.

### Preparing a stacked-type battery:

Stacking the positive electrode plate, the separator, and the negative electrode plate alternately, where the electrode plates of at least one electrode assembly are arranged in the following order: negative electrode plate, positive electrode plate, and negative electrode plate, sequentially. In other words, the two adjacent negative electrode plates are of the same type. The separator is folded continuously in a Z-shape between the positive electrode plate and the negative electrode plate. The positive electrode plate and the negative electrode plate are stacked alternately in the folds to form a stacked structure, and then the stacked structure is put into a housing. Tabs are welded to the stacked structure to form an electrode assembly. The electrode assembly is vacuum-dried at 100 °C for 24 hours, and then an electrolyte solution is injected into the electrode assembly, and the electrode assembly is subjected to chemical formation and a capacity test to ultimately make a hard-shell battery that can output a voltage of 2.5 V to 4.25 V and a capacity of 65 Ah.

### Comparative Embodiment 3

The difference from Embodiment 2 lies in the preparation method of the negative electrode plate. The specific preparation method is: Mixing artificial graphite, a silicon-based material (gravimetric capacity: 2800 to 3500 mAh/g), single-walled carbon nanotubes (the above constituents serve as negative active materials), acetylene black as a conductive agent, sodium carboxymethyl cellulose (CMC) as a thickener, styrene-butadiene rubber (SBR) as a binder at a mass ratio of 81.5: 14: 0.3: 1: 1.2: 2. Adding deionized water as a solvent. Stirring the mixture under the action of a vacuum mixer until the system is homogeneous to form a slurry. Applying the slurry onto both surfaces of 10 µm-thick negative current collector copper foil that contains a conductive carbon undercoat. Drying the foil at 110 °C for 20 minutes. Cold-pressing the dried foil to obtain a negative electrode plate with the following parameter values: areal mass density 6.2 mg/cm², areal capacity density 4.87 mAh/cm², compaction density 1.7 g/cm³, and thickness 83 µm.

### III. Performance test

(I) Electrode plate performance test
   (1) Testing the capacity per unit volume
      1. Die-cutting an electrode plate into discs, with the area of each disc being denoted as S (and the diameter of each disc being 14 mm). Measuring the thickness of the disc by using a 0.1 µm resolution micrometer, recording the thickness as H, and calculating a volume V = SH.
      2. Weighing the disc by use of a 0.01 mg resolution electronic scale, and recording the measured weight as W₁. Scrubbing off the active layers on both sides of the current collector, weighing the current collector alone, and recording the measured weight as W₂. Calculating the total weight of the active layers on both sides as: W₃ = W₁ - W₂.
      3. Scrubbing off the active layer on one side of the electrode plate mentioned in step 1 above so that a current collector coated with active layer on a single side is retained. Using the electronic scale in step 2 to weigh the current collector coated with active layer on a single side, and recording the measured weight as W₄. Calculating the weight of the active layer on a single side as: W₅ = W₄ - W₂.
      4. Assembling the electrode plate obtained in step 3 in a glovebox to form a coin half-cell that uses a lithium sheet as a counter electrode. Measuring the capacity of coin half-cell by using an instrument of Wuhan LAND Electronics Co., Ltd., and recording the capacity as C₁. Calculating the gravimetric capacity of the active layer as: C₂ = C₁/W₅.
      5. Calculating the overall capacity of the disc as: C₃ = C₂ × W₃, and calculating the capacity per unit volume of the disc as: C₄ = C₃/V.
(II) Testing the battery performance
   (1) Testing the first-cycle capacity retention rate of a secondary battery
      Charging the battery at 0.02C at 45 °C for 10 hours, and then charging the battery at 0.33C at 25 °C until the voltage reaches 4.25 V, and then charging the battery at a constant voltage of 4.25 V until the current drops to 0.05C. Finally, discharging the battery at 0.33C until the voltage drops to 2.5 V. Measuring the capacity at this time, and recording the measured value as D₀.
   (2) Testing the cycle performance of a secondary battery
      Performing the following steps at 45 °C:
      Leaving the battery to stand for 5 minutes; discharging the battery at a current of 0.33D₀ until the voltage drops to 2.5 V; leaving the battery to stand for 5 minutes; charging the battery at a current of 0.33D₀ until the voltage reaches 4.25 V, and then charging the battery at a constant voltage of 4.25 V until the current drops to 0.05C; leaving the battery to stand for 5 minutes; and discharging the battery at 0.33C until the voltage drops to 2.5 V, and recording the capacity at this time as C₀.
      Leaving the secondary battery to stand for 5 minutes, and then cycling the battery according to the following procedure: Leaving the battery to stand for 20 minutes; charging the battery at a current of 1D₀ until the voltage reaches 4.25 V, and then charging the battery at a constant voltage of 4.25 V until the current drops to 0.05D₀; leaving the battery to stand for 5 minutes; and discharging the battery at a current of 1D₀ until the voltage drops to 2.5 V, and then leaving the battery to stand for 5 minutes. Recording the discharge capacity at the end of each cycle as Cₘ, where m represents the number of cycles. When m = 1000, calculating the reversible capacity retention rate F₁ as: F₁ = Cₘ/C₀ × 100%. The higher the reversible capacity retention rate, the higher the cycle performance.
   (3) Testing the storage performance of a secondary battery
      Step I: Discharging the battery at 0.33D₀ at 25 °C until the voltage drops to 2.5 V; leaving the battery to stand for 5 minutes; charging the battery at a current of 0.33D₀ until the voltage reaches 4.25 V, and then charging the battery at a constant voltage of 4.25 V until the current drops to 0.05D₀; leaving the battery to stand for 5 minutes; discharging the battery at 0.33C until the voltage drops to 2.5 V, and recording the capacity at this time as C₀ (the capacity of the battery obtained in this step after storage is a reversible capacity, denoted as Cₜ, where t is a storage duration). Charging the battery at a current of 0.33D₀ until the voltage reaches 4.25 V, and then charging the battery at a constant voltage of 4.25 V until the current drops to 0.05D₀. At this time, the battery is in a fully charged state.
      Step II: Placing the fully charged secondary battery into a 60 °C environment. Storing the battery for a preset period of time, and then taking out the battery and testing the battery according to step I. Subsequently, placing the fully charged secondary battery into a 60 °C environment. Repeating the above operations until t = 180 days, and calculating the reversible capacity retention rate F₂ as: F₂ = *C*ₜ/*C*₀ × 100%.
   (4) Testing the expansion force and expansion displacement of the secondary battery

Using a steel sheet jig to fix the battery cell between two pressure plates. Fixing the positions of the upper and lower pressure plates by using bolts. Mounting a force sensor on the upper pressure plate to monitor the pressure. Measuring the distance h₀ between the upper pressure plate and the lower pressure plate before charging the battery cell. Recording the corresponding pressure when the battery cell reaches the fully charged state, and measuring the distance h₁ between the upper pressure plate and the lower pressure plate after the battery is fully charged. Calculating the expansion rate of the battery cell as: expansion rate = (h₁/h₀ - 1) × 100%.

Table 1 and Table 2 show measured parameter values of electrode plates of the battery cells in different embodiments and comparative embodiments; and Table 3 shows the measured battery performance in different embodiments and comparative embodiments.

**Table 1 Parameters of negative electrode plates of the battery cell**

| | Gravimetric capacity of silicon-based material (mAh/g) | Mass fraction of silicon in negative electrode 1 (P1) | Mass fraction of silicon in negative electrode 2 (P2) | Pₜₒₜₐₗ | Cs (Ah/mL) | Cg (Ah/mL) | n | M |
|---|---|---|---|---|---|---|---|---|
| Embodiment 1 | 1800 to 2300 | 13% | 0% | 5.00% | 0.82 | 0.56 | 1.5 | 1 |
| Embodiment 2 | 1800 to 2300 | 26% | 0% | 5.00% | 1.04 | 0.56 | 1.9 | 2 |
| Embodiment 3 | 1800 to 2300 | 10% | 4% | 5.00% | 0.76 | 0.63 | 1.2 | 3 |
| Embodiment 4 | 1800 to 2300 | 10% | 0% | 4.10% | 0.44 | 0.32 | 1.4 | 1 |
| Embodiment 5 | 2800 to 3500 | 10% | 0% | 4.30% | 0.75 | 0.59 | 1.3 | 1 |
| Embodiment 6 | 2800 to 3500 | 50% | 0% | 4.50% | 2.38 | 0.59 | 4.0 | 2 |
| Embodiment 7 | 2800 to 3500 | 50% | 10% | 14.30% | 2.68 | 1.17 | 2.3 | 3 |
| Comparative Embodiment 1 | 1800 to 2300 | // | // | 4.00% | // | // | // | // |
| Comparative Embodiment 2 | 2800 to 3500 | // | // | 4.00% | // | // | // | // |
| Comparative Embodiment 3 | 2800 to 3500 | // | // | 14.00% | // | // | // | // |

| | | | | | | | | |
|---|---|---|---|---|---|---|---|---|
| Note: The proportion of the mass of silicon in relation to the total mass of the active material in the negative electrode is Pₜₒₜₐₗ = (W₁ × P₁ + W₂ × P₂ × M)//(W₁ + W₂ × M), where P₁ is the mass fraction of silicon in the negative electrode 1, P₂ is the mass fraction of silicon in the negative electrode 2, W₁ is the mass of silicon in the negative electrode 1, W₂ is the mass of silicon in the negative electrode 2, and n = Cs/Cg. | | | | | | | | |

**Table 2 Parameters of electrode plates of the battery cell (To be continued)**

| | Compaction density of positive electrode (g/cm³) | Areal capacity density of positive electrode (mAh/cm²) | Areal mass density of positive electrode (mg/cm²) | Compaction density of negative electrode (g/cm³) | Areal capacity density of negative electrode (mAh/cm²) |
|---|---|---|---|---|---|
| Embodiment 1 | 3.50 | 2.36 | 12.07 | 1.70 | 2.60 |
| Embodiment 2 | 3.50 | 2.36 | 12.07 | 1.70 | 2.60 |
| Embodiment 3 | 3.50 | 2.36 | 12.07 | 1.70 | 2.60 |
| Embodiment 4 | 3.50 | 2.36 | 12.07 | 1.00 | 2.60 |
| Embodiment 5 | 3.50 | 4.43 | 22.59 | 1.70 | 4.87 |
| Embodiment 6 | 3.50 | 4.43 | 22.59 | 1.70 | 4.87 |
| Embodiment 7 | 3.50 | 4.43 | 22.59 | 2.00 | 4.87 |
| Comparative Embodiment 1 | 3.50 | 2.36 | 12.07 | 1.70 | 2.60 |
| Comparative Embodiment 2 | 3.50 | 4.43 | 22.59 | 1.70 | 4.87 |
| Comparative Embodiment 3 | 3.50 | 4.43 | 22.59 | 1.70 | 4.87 |

**Table 2 Parameters of electrode plates of the battery cell (Continued)**

| | Areal mass density of negative electrode 1 (mg/cm²) | Thickness of negative electrode 1 (µm) | Areal mass density of negative electrode 2 (mg/cm²) | Thickness of negative electrode 2 (µm) |
|---|---|---|---|---|
| Embodiment 1 | 4.53 | 63.30 | 7.05 | 92.90 |
| Embodiment 2 | 3.38 | 49.80 | 7.05 | 92.90 |
| Embodiment 3 | 4.95 | 68.20 | 6.14 | 82.30 |
| Embodiment 4 | 5.42 | 118.40 | 7.65 | 163.00 |
| Embodiment 5 | 10.16 | 129.50 | 13.21 | 165.40 |
| Embodiment 6 | 2.63 | 40.90 | 13.21 | 165.40 |
| Embodiment 7 | 2.63 | 36.30 | 7.32 | 83.20 |
| Comparative Embodiment 1 | 6.072 | 81.40 | // | // |
| Comparative Embodiment 2 | 10.07 | 128.40 | // | // |
| Comparative Embodiment 3 | 6.197 | 82.90 | // | // |

| | | | | |
|---|---|---|---|---|
| Note: Areal capacity density = areal mass density × gravimetric capacity of active material × mass fraction of active material in the active layer. | | | | |

**Table 3 Performance parameters of stacked-type battery**

| | Full-charge expansion force (kg) | Full-charge expansion rate | Reversible capacity retention rate of fully charged battery after 180 days of storage at 60 °C | 1000^{th}-cycle reversible capacity retention rate of battery cycled at 45 °C |
|---|---|---|---|---|
| Embodiment 1 | 104 | 1.50% | 94.30% | 93.10% |
| Embodiment 2 | 100 | 1.20% | 94.60% | 93.60% |
| Embodiment 3 | 106 | 1.56% | 94.20% | 92.90% |
| Embodiment 4 | 90 | 1.15% | 94.30% | 92.70% |
| Embodiment 5 | 132 | 2.20% | 94.30% | 91.90% |
| Embodiment 6 | 127 | 2.00% | 94.60% | 92.40% |
| Embodiment 7 | 157 | 3.10% | 92.00% | 86.90% |
| Comparative Embodiment 1 | 116 | 2.20% | 93.50% | 91.10% |
| Comparative Embodiment 2 | 148 | 3.10% | 93.20% | 90.40% |
| Comparative Embodiment 3 | 184 | 4.20% | 90.70% | 82.10% |

From Table 1, Table 2, and Table 3, the following conclusions can be drawn: In contrast to Embodiments 1 to 4, Comparative Embodiment 1 differs from Embodiments 1 to 4 in that the battery contains only one type of negative electrode plate. The results show that the expansion force and the full-charge expansion rate of the battery containing the negative electrode plates of Embodiments 1 to 4 are lower than those of Comparative Embodiment 1. The reversible capacity retention rate of the fully charged battery after 180 days of storage at 60 °C and the 1000^{th}-cycle reversible capacity retention rate of the battery cycled at 45 °C are superior to those of Comparative embodiment 1.

Comparative Embodiment 2 differs from Embodiment 5 and Embodiment 6 in that the battery contains only one type of negative electrode plate. The results show that the expansion force and the full-charge expansion rate of the battery containing the negative electrode plates of Embodiments 5 and 6 are lower than those of Comparative Embodiment 2. The reversible capacity retention rate of the fully charged battery after 180 days of storage at 60 °C and the 1000^{th}-cycle reversible capacity retention rate of the battery cycled at 45 °C are superior to those of Comparative embodiment 2.

Comparative Embodiment 3 differs from Embodiment 7 in that the battery contains only one type of negative electrode plate. The results show that the expansion force and the full-charge expansion rate of the battery containing the negative electrode plates of Embodiment 7 are lower than those of Comparative Embodiment 3. The reversible capacity retention rate of the fully charged battery after 180 days of storage at 60 °C and the 1000^{th}-cycle reversible capacity retention rate of the battery cycled at 45 °C are superior to those of Comparative embodiment 3.

In summary, the battery cell defined in this application contains a plurality of positive electrode plates and a plurality of negative electrode plates, and a positive electrode plate is separated from an adjacent negative electrode plate by a separator. The negative electrode plates include a first negative electrode plate and a second negative electrode plate that differ in capacity. At least one negative electrode plate of a relatively low capacity is disposed between two adjacent negative electrode plates of a relatively high capacity. In this way, the expansion effect of the negative electrode plate is alleviated, and the battery failure caused by the expansion of the negative electrode plate is reduced.

Described above are merely some specific embodiments of this application, but the protection scope of this application is not limited to such embodiments. Various equivalent modifications and replacements easily conceivable by any person skilled in the art without departing from the technical scope disclosed herein still fall within the protection scope of this application. Therefore, the protection scope of this application is subject to the protection scope of the claims.

## Claims

1. A battery cell, **characterized in that** the battery cell comprises at least one electrode assembly, and the electrode assembly comprises:
a positive electrode plate; and
a negative electrode plate, wherein
the negative electrode plate comprises a first negative electrode plate and a second negative electrode plate, a capacity per unit volume of the first negative electrode plate is greater than a capacity per unit volume of the second negative electrode plate, at least one positive electrode plate is disposed between two adjacent first negative electrode plates, and at least one second negative electrode plate is disposed between the two adjacent first negative electrode plates.

2. The battery cell according to claim 1, **characterized in that**
M second negative electrode plates are disposed between the two adjacent first negative electrode plates, wherein 1 ≤ M ≤ 2.5n, n = Cs/Cg, M is an integer greater than or equal to 1, Cs is the capacity per unit volume of the first negative electrode plate, and Cg is the capacity per unit volume of the second negative electrode plate.

3. The battery cell according to claim 2, **characterized in that** n is greater than or equal to 1.

4. The battery cell according to any one of claims 1 to 3, **characterized in that**
the capacity per unit volume of the first negative electrode plate is 0.44 Ah/mL to 2.68 Ah/mL; and/or
the capacity per unit volume of the second negative electrode plate is 0.32 Ah/mL to 1.17 Ah/mL.

5. The battery cell according to any one of claims 1 to 4, **characterized in that** a total number of the first negative electrode plates is less than or equal to a total number of the second negative electrode plates.

6. The battery cell according to any one of claims 1 to 5, **characterized in that** an areal capacity density ratio of any one of the positive electrode plates to any one of the negative electrode plates is 1.01 ≤ C_{negative}/Cₚₒₛᵢₜᵢᵥₑ ≤ 1.2, wherein the areal capacity density is a capacity per unit area of an active layer on a single side of the positive electrode plate or negative electrode plate.

7. The battery cell according to any one of claims 1 to 6, **characterized in that**
an areal mass density of the first negative electrode plate is 2.63 mg/cm² to 10.16 mg/cm²; and/or
an areal mass density of the second negative electrode plate is 6.06 mg/cm² to 13.21 mg/cm².

8. The battery cell according to any one of claims 1 to 7, **characterized in that**
the first negative electrode plate comprises a first active layer, and a mass fraction of a negative active material in the first active layer is greater than or equal to 90% and less than or equal to 95.5%; and/or
the second negative electrode plate comprises a second active layer, and a mass fraction of a negative active material in the second active layer is greater than or equal to 96%.

9. The battery cell according to any one of claims 1 to 8, **characterized in that** the first negative electrode plate comprises a silicon-based electrode plate, and an active material in the silicon-based electrode plate comprises one or more of a pure silicon material, a silicon-carbon material, or a silicon-oxygen material, and preferably, the silicon-oxygen material comprises one or more of a pre-lithiated silicon-oxygen compound or a pre-magnesiated silicon-oxygen compound.

10. The battery cell according to claim 9, **characterized in that** a mass fraction of silicon in the active material of the silicon-based electrode plate is 10% to 50%, and a mass fraction of graphite in the active material of the silicon-based electrode plate is 40% to 85.5%.

11. The battery cell according to any one of claims 1 to 10, **characterized in that**
the second negative electrode plate comprises a graphite electrode plate, and an active material in the graphite electrode plate comprises artificial graphite and/or natural graphite.

12. The battery cell according to any one of claims 1 to 11, **characterized in that** an areal mass density of the positive electrode plate is 12 mg/cm² to 30 mg/cm².

13. The battery cell according to any one of claims 1 to 12, **characterized in that** a compaction density of the positive electrode plate is 2.3 g/cm³ to 4 g/cm³.

14. The battery cell according to any one of claims 1 to 13, **characterized in that** the positive electrode plate comprises a positive active layer, and a mass fraction of a positive active material in the positive active layer is greater than or equal to 97%.

15. The battery cell according to any one of claims 1 to 14, **characterized in that** the positive electrode plate comprises one or more of a lithium iron phosphate electrode plate, a lithium cobalt oxide electrode plate, a lithium nickel cobalt manganese oxide electrode plate, or a lithium manganese iron phosphate electrode plate.

16. The battery cell according to any one of claims 1 to 15, **characterized in that** the battery cell further comprises a separator, the separator is configured to implement isolation between a positive electrode plate and a negative electrode plate that are adjacent to each other, the separator is folded in a Z-shape, and the positive electrode plates and the negative electrode plates are alternately inserted in folds of the stacked separator.

17. A stacked-type battery, **characterized in that** the battery comprises a housing and the battery cell according to any one of claims 1 to 16.

18. An electrical device, **characterized in that** the electrical device comprises the stacked-type battery according to claim 17.
